# FASCICULE DE BREVET EUROPEEN

(11) **EP 3 921 578 B1**
(45) Date de publication et mention de la délivrance du brevet: **03.04.2024**
(21) Numéro de dépôt: 20707307.3
(22) Date de dépôt: 06.02.2020
(51) Int. Cl.: F24C 7/04, A47J 37/06, F24C 15/22

(54) **CUISSON HOMOGÈNE D'ALIMENTS PAR UN DISPOSITIF PERMETTANT L'ISOLATION STATIQUE, LA FOCALISATION, LA CANALISATION ET LA MODULATION DES ÉNERGIES**
GLEICHMÄSSIGES KOCHEN VON NAHRUNGSMITTELN MITTELS EINER VORRICHTUNG ZUR STATISCHEN ISOLATION, FOKUSSIERUNG, KANALISIERUNG UND MODULATION VON ENERGIEN
EVEN COOKING OF FOODSTUFFS BY MEANS OF A DEVICE ALLOWING STATIC ISOLATION, FOCUSING, CHANNELING AND MODULATION OF ENERGIES

(30) Priorité: 06.02.2019 FR 1901172
(43) Date de publication de la demande: 15.12.2021
(73) Titulaire: Mélédo, Hervé, 44240 Sucé-sur-Erdre (FR)
(72) Inventeur: Mélédo, Hervé, 44240 Sucé-sur-Erdre (FR)
(74) Mandataire: Icosa
(86) Numéro de dépôt international: PCT/FR2020/050208
(87) Numéro de publication internationale: WO 2020/161442

(56) Documents cités:
- EP-A1- 2 286 701
- CN-A- 108 392 094
- JP-A- H0 320 532
- JP-A- 2017 190 898
- US-A- 2 993 431
- US-A- 4 386 558
- US-A- 5 805 769
- US-A1- 2011 059 210

## Description

### DOMAINE DE L'INVENTION

La présente invention concerne le domaine des appareils de cuisson. La présente invention concerne en particulier un appareil de cuisson radiant ouvert permettant une distribution homogène de la chaleur à l'intérieur de la chambre de cuisson dudit appareil pour obtenir une cuisson homogène sans aucune intervention en cours de cuisson.

### ÉTAT DE LA TECHNIQUE

Durant ces dernières années, de nombreux appareils de cuisson possédant des caractéristiques diverses ont été développés. En particulier, les appareils de cuisson radiants, notamment les appareils de cuisson à rayonnements infrarouges, ont été développés pour la raison suivante : les rayonnements infrarouges alliés à la vapeur sans pression dans une cocotte non hermétique permettent une cuisson à basse température, à savoir des températures de cuisson et de dorage n'excédant pas 100°C. Ce mode de cuisson basse température est particulièrement intéressant en ce qu'il permet non seulement de conserver les nutriments contenus dans les aliments tels que les vitamines, les oligo-éléments et les sels minéraux, mais également de conserver la saveur naturelle des aliments. Ce mode de cuisson est donc reconnu pour être très sain. Au contraire, les systèmes de cuisson présents dans les fours traditionnels préconisent généralement des températures de cuisson au dessus de 100°C.

Le brevet EP 2 374 385 (représenté sur la Figure 1) décrit un appareil de cuisson à rayonnements infrarouges permettant de cuire les aliments contenus dans une cocotte de cuisson. Cet appareil de cuisson à rayonnements infrarouges est un ensemble formé de :
- une partie inférieure et une partie supérieure parallèles ; les parties inférieure et supérieure comprenant chacune une cassette de cuisson ; ladite cassette de cuisson comprenant au moins un élément radiant ;
- deux parties verticales latérales qui assurent le maintien parallèle et à distance des parties inférieure et supérieure de l'appareil de cuisson ;
- une partie arrière verticale qui ferme cet ensemble.

Dans les appareils de cuisson qui comprennent une partie frontale ouverte sur l'extérieur, un des problèmes connus est la perte de chaleur au niveau frontal, qui fait que la partie de la cocotte de cuisson placée au niveau de la partie frontale de l'appareil de cuisson radiant ouvert reçoit moins de chaleur que la partie arrière de la cocotte. Il en résulte que la cuisson des aliments à l'intérieur de la cocotte n'est pas homogène.

La demande de brevet européen EP 2286701 divulgue un appareil de cuisson radiant ouvert ayant une forme en C ou une forme en U et comprenant une cassette de cuisson inférieure ; une cassette de cuisson supérieure ; des éléments radiants ; des moyens d'isolation et des surfaces de réflexion de forme parabolique.

Le brevet US4386558 divulgue un appareil de cuisson radiant ouvert ayant une forme en C ou une forme en U et comprenant une cassette de cuisson supérieure ; des éléments radiants et des éléments de convection de l'air introduit dans l'appareil de cuisson.

Le brevet US5805769 divulgue un appareil de cuisson radiant ouvert ayant une forme en C ou une forme en U et comprenant une cassette de cuisson inférieure ; une cassette de cuisson supérieure ; des éléments radiants ; des moyens d'isolation et des surfaces de réflexion de forme elliptique.

Les documents JP 2017 190898 A et JP H03 20532 A divulguent d'autres appareils de cuisson ayant notamment des éléments radiants supérieurs pourvus de réflecteurs.

### Illustration par l'art actuel des cuissons

Une cocotte de cuisson, contenant un gratin de pomme de terre a été placée dans ledit appareil de cuisson. Des moyens permettant de mesurer la température du gratin ont également été placés dans la cocotte de cuisson. Durant la cuisson du gratin, la différence de température entre l'avant et l'arrière de la cocotte de cuisson atteint plus de 20 °C. Ce différentiel de température entraîne une hétérogénéité de la cuisson et aussi du dorage des aliments.

Il a été constaté que cette hétérogénéité est, en outre, variable selon les tailles des cocottes de cuisson. Plus la cocotte de cuisson est grande et se rapproche voir dépasse de la partie frontale dudit appareil de cuisson, plus les écarts de cuisson s'amplifient.

La présente invention vise à résoudre ce problème d'hétérogénéité et de perte de chaleur dans les fours radiants ouverts. Ainsi, l'invention propose un nouvel appareil de cuisson radiant et ouvert permettant une cuisson homogène.

### RÉSUMÉ

L'invention concerne donc un appareil de cuisson radiant ouvert ayant une forme en C ou une forme en U et comprenant une cassette de cuisson inférieure; une cassette de cuisson supérieure ; et une partie postérieure définissant ensemble une chambre de cuisson ; ledit appareil comprenant une portion proximale comprenant au moins un élément radiant proximal ; et une portion distale comprenant au moins un élément radiant distal au moins un moyen d'isolation, séparant le au moins un élément radiant distal du au moins un élément radial proximal; ledit moyen d'isolation comprenant au moins un premier réflecteur configuré pour diriger les rayonnements émis par le au moins un élément radiant distal vers la chambre de cuisson.

Selon un mode de réalisation, au moins un moyen d'isolation de la partie inférieure de l'appareil comprend en outre au moins un deuxième réflecteur. Selon un mode de réalisation, ledit premier et ledit deuxième réflecteurs, sont connectés entre eux par au moins un troisième réflecteur. Selon un mode de réalisation, au moins un moyen d'isolation entoure partiellement un élément radiant distal ; ledit au moins un moyen d'isolation comprenant une ouverture dirigée vers la chambre de cuisson.

Selon l'invention, l'inclinaison du premier réflecteur par rapport à la surface horizontale inférieure de la cassette de cuisson inférieure forme un angle β compris entre 70° et 120°. Selon un mode de réalisation, l'inclinaison du premier réflecteur par rapport à la surface horizontale de la cassette de cuisson supérieure est inclinée par rapport au plan de la partie supérieure, forme un angle β compris entre 70° et 120°. Selon un mode de réalisation, l'inclinaison du deuxième réflecteur par rapport à la surface horizontale inférieure de la cassette de cuisson inférieure, forme un angle α compris entre 85° et 140°. Selon un mode de réalisation, l'inclinaison du deuxième réflecteur par rapport à la surface horizontale supérieure de la cassette de cuisson inférieure, forme un angle α' compris entre 85° et 140°.

Selon un mode de réalisation, la portion proximale comprend un nombre d'éléments radiants proximaux compris entre 1 et 20. Selon un mode de réalisation, la portion distale comprend au moins un élément radiant distal. Selon un mode de réalisation, la puissance du au moins un élément radiant distal, est identique ou supérieure la puissance du au moins un élément radiant proximal. Selon un mode de réalisation, l'ouverture d'un moyen d'isolation de la portion distale est configurée pour être parallèle à et/ou en regard de l'ouverture d'un moyen d'isolation de la portion distale. Selon un mode de réalisation, l'appareil de cuisson radiant ouvert comprenant au moins un réflecteur additionnel fermant partiellement la surface latérale de la chambre de cuisson. Selon un mode de réalisation, les cassettes de cuisson sont fixées à des flancs internes qui comprennent au moins un moyen additionnel allongé d'isolation fermé à ses extrémités.

Dans un mode de réalisation préféré, l'appareil de cuisson selon l'invention comprend des déflecteurs d'air frontaux dans la portion distale dudit appareil.

Dans un mode de réalisation préféré, l'appareil de cuisson selon l'invention comprend au moins un déflecteur d'air frontal dans la portion distale dudit appareil. Idéalement il possède deux déflecteurs d'air frontaux disposés symétriquement par rapport à un plan central de symétrie séparant l'appareil de cuisson ouvert en deux parties symétriques pour obtenir une cassette de cuisson inférieure et une cassette de cuisson supérieure.

Dans une configuration préférée, chacun des déflecteurs présente une surface plane et une surface oblique par rapport à la surface plane de manière à orienter l'air chaud central vers les ouïes extérieures.

Dans un autre mode de réalisation, au moins un élément radial de l'appareil selon l'invention reçoit une couche de matériau isolant et réfléchissant partiellement autour et le long de sa face opposée à la chambre de cuisson. De manière préférentielle, tous les éléments radiaux reçoivent ladite couche.

Enfin, dans autre mode de réalisation alternatif, au moins un élément radial de l'appareil selon l'invention reçoit des éléments chauffants indépendants disposés longitudinalement par rapport audit élément de manière à ce que les extrémités de l'élément radial puissent être sélectivement chauffées et la zone centrale non chauffée. Dans un mode préféré, les éléments chauffants sont des résistances chauffantes.

### DÉFINITIONS

Dans la présente invention, les termes ci-dessous sont définis de la manière suivante :
- « **Chambre de cuisson** » fait, ici, référence à l'espace dans lequel est placé une cocotte de cuisson. La chambre de cuisson comprend des cassettes de cuisson, qui intègrent un ou plusieurs radiants parallèles.
- « **Forme en C** » ou « **Forme en U** » : fait référence à la forme générale formée par une première et une deuxième surface parallèle entre elles et une troisième surface verticale en contact avec la première et la deuxième surfaces. Ces 3 surfaces sont fixées sur éléments verticaux en forme de « U » de l'appareil de cuisson, assurant ainsi leur maintien parallèle et à distance. Les termes « Forme en C » et « Forme en U » font également référence à toute forme similaire à une forme en C ou à une forme en U.
- « **Extrémité distale** » : fait, ici, référence à l'extrémité de la portion distale la plus éloignée de la partie postérieure.
- « **Partie inférieure** » du « C » ou du « U » fait référence à la partie parallèle à la partie supérieure. La partie inférieure du dispositif est généralement en contact avec un support, par exemple mais non limitativement, une table.
- « **Partie supérieure** » fait référence à la partie parallèle à la partie inférieure.
- « **Partie postérieure** » fait référence à la partie arrière d'un appareil de cuisson selon l'invention, cette partie postérieure étant opposée à la partie frontale ouverte dudit appareil de cuisson.
- « **Partie frontale** » fait référence à la partie avant ouverte d'un appareil de cuisson selon l'invention.
- « **Moyen d'isolation** » fait référence à un ou plusieurs moyens permettant notamment :
   1. de réduire les perditions de chaleur active utile provenant des radians ; et/ou
   2. d'éviter le passage d'air frais parasite venant de extérieur à l'appareil de cuisson ; et/ou
   3. d'isoler la chambre de cuisson des flux d'air interne provenant notamment de l'air pulsé à l'intérieur de l'appareil de cuisson ; ce flux d'air interne est frais et a pour objectif le refroidissement de l'enveloppe extérieure de l'appareil de cuisson à des fins de sécurité ; et/ou
   4. d'optimiser le transfert, la localisation et réduire la perte de rayonnements (en particulier la chaleur) ; ces moyens pouvant agir par contact, réflexion, concentration desdits rayonnements ;et/ou
   5. de créer des zones isolantes.
- « **Ouvert** » : fait, ici, référence à un appareil de cuisson qui ne possède pas de porte frontale et optionnellement pas de cotés latéraux.
- « **Ferme partiellement** » fait, ici, référence au fait qu'un moyen couvrant ou obturant qui ferme jusqu'à la moitié, jusqu'au quart ou jusqu'au vingtième une ouverture, notamment une ouverture latérale.
- « **Portion proximale** » fait référence à la portion de la partie inférieure ou supérieure la plus proche de la partie postérieure.
- « **Portion distale** » fait référence à la portion de la partie inférieure ou supérieure la plus proche de la partie frontale.
- « **Élément radiant** » fait, ici, référence à tout objet rayonnant, c'est-à-dire tout objet qui émet des rayonnements en particulier des rayonnements infra-rouges ; particulier, tout objet émettant de la chaleur par rayonnements. Par rayonnement, on entend aussi radiation.
- « **Réflecteur** » fait, ici, référence à une surface qui est capable de réfléchir et/ou concentrer l'énergie des rayonnements qu'il reçoit.

### BRÈVE DESCRIPTION DES FIGURES

La **Figure 1** illustre un appareil de cuisson radiant ouvert de l'art antérieur.
La **Figure 2** est une vue transversale de la chambre de cuisson d'un appareil de cuisson selon l'invention
**Figure 3A** est une vue transversale de la partie inférieure de la partie distale de la cassette de cuisson inférieure.
**Figure 3B** est une vue transversale de la partie supérieure de la partie distale de la cassette de cuisson supérieure.

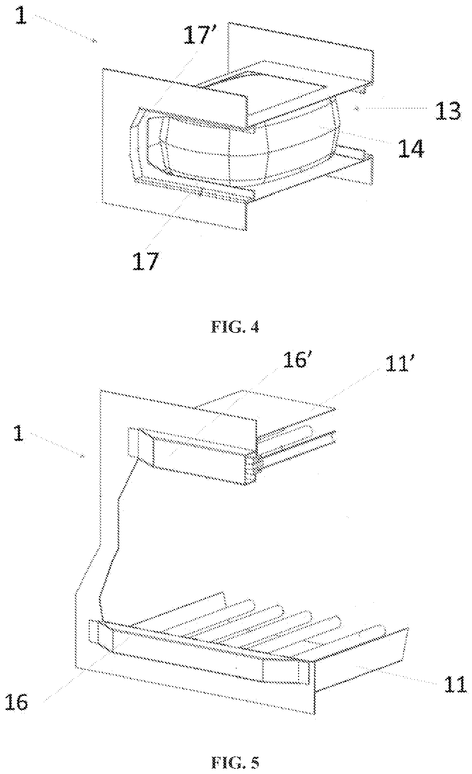

**Figure 4** illustre l'appareil de cuisson radiant ouvert selon l'invention, dont les flancs externes équipées de réflecteurs additionnels sur ses faces latérales.
**Figure 5** illustre l'intérieur de l'appareil de cuisson radiant ouvert selon un mode de réalisation de l'invention comprenant des flancs intérieurs en forme de « U » et des moyens d'isolation allongés.
**Figure 6** illustre le flux d'air chaud au sein de l'appareil de cuisson radiant ouvert selon un mode de réalisation de l'invention comprenant des ventilateurs et des ouïes d'aération selon une coupe transversale.
**Figure 7** illustre une coupe longitudinale d'un mode de réalisation dans lequel les éléments radiants de l'invention sont recouverts d'une couche de matériaux isolants et réfléchissants partiellement autour et le long de leur surface opposée à la chambre de cuisson.
**Figure 8** illustre une coupe transversale de l'appareil de cuisson selon l'invention selon un mode de réalisation dans lequel l'élément radiant chauffe de manière sélective les extrémités latérales de la chambre de cuisson.

### RÉFÉRENCES

1 - Appareil de cuisson radiant ouvert ;
2, 2' - Portions proximales des boîtes à radiants 11, 11' respectivement inférieure et supérieure
3, 3' - Portion distale des boîtes à radiants 11,1 1' respectivement inférieure et supérieure
11 - Cassette de cuisson inférieure
11' - Cassette de cuisson supérieure
13 - Chambre de cuisson
14 - Cocotte de cuisson
16 - Coffret isolant latéraux inférieur
16' - Coffret isolant latéraux supérieur
17 - Isolation latérale inférieure de la chambre de cuisson
17' - Isolation latérale supérieure de la chambre de cuisson
21 - Radiants proximaux inférieurs
21' - Radiants proximaux supérieurs
31 - Radiants distaux inférieurs
31' - Radiants distaux supérieurs
32 - Extrémité de la portion distale de la cassette de cuisson inférieure
32' - Extrémité de la portion distale de la cassette de cuisson supérieure
33 - Moyen d'isolation de la partie distale de la cassette de cuisson inférieure
33' - Moyen d'isolation de la partie distale de la cassette de cuisson supérieure
34, 35 - Isolation statique de la partie distale de la cassette de cuisson inférieure
34', 35'- Isolation statique de la partie distale de la cassette de cuisson supérieure
331 - Premier réflecteur vertical situé au niveau de de la cassette de cuisson inférieure
331' - Premier réflecteur vertical situé au niveau de de la cassette de cuisson supérieure
332 - Deuxième réflecteur vertical situé au niveau de de la cassette de cuisson inférieure
332' - Deuxième réflecteur vertical situé au niveau de de la cassette de cuisson supérieure
333 - Troisième réflecteur horizontal situé au niveau de de la cassette de cuisson inférieure
333' - Troisième réflecteur horizontal situé au niveau de de la cassette de cuisson supérieure
334 - Ouverture du moyen d'isolation de la cassette inférieure
334' - Ouverture du moyen d'isolation.de la cassette supérieure
40, 40' - ventilateur(s)
50,50' - déflecteur(s) d'air
51,51' - surface plane de déflecteur s'étendant parallèlement au plan des cassettes de cuisson
52,52' - surface oblique de déflecteur pour évacuation d'air chaud central
60, 60' - ouïe(s) d'aération
70 - couche de matériaux isolants et réfléchissants
210' - zone centrale sélectivement non chauffée
211 - zones d'extrémités sélectivement chauffées

### DESCRIPTION DÉTAILLÉE

La description détaillée ci-dessous sera mieux comprise en conjonction avec les figures. A des fins illustratives, l'appareil est montré dans ses modes de réalisation préférentiels. Ainsi, la présente demande ne se limite pas à certaines structures ou modes de réalisation illustrés. Les figures ne sont pas à l'échelle et ne doivent pas être comprises comme limitant la portée des revendications aux modes de réalisation illustrés.

La présente invention porte sur un four ouvert ou appareil de cuisson radiant ouvert.

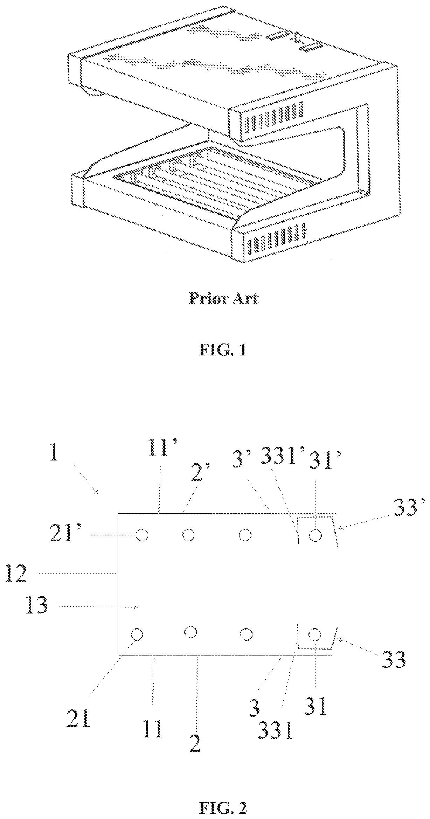

La Figure 1 montre un appareil de cuisson radiant ouvert **de l'art antérieur** ayant une forme en C ou une forme en U et comprenant :
- une partie inférieure horizontale ;
- une partie supérieure horizontale ;
- une partie postérieure verticale ;
- des parties latérales verticales en forme de « U » qui assurent ainsi leur maintien parallèle et à distance de la partie inférieure et de la partie supérieure.
- Ladite partie inférieure, ladite partie supérieure et ladite partie postérieure définissent la chambre de cuisson qui reçoit les cocottes de cuisson, ladite chambre de cuisson comprenant une cassette de cuisson inférieure formée de quelques éléments radiants.

La Figure 2 montre un appareil de cuisson radiant ouvert **1** selon l'invention ayant une forme en C ou une forme en U et comprenant :
- une cassette de cuisson inférieure horizontale **11** ;
- une cassette de cuisson supérieure horizontale **11'** ;
- une partie postérieure verticale **12** ;
- des parties latérales verticales en forme de « U » qui assurent ainsi le maintien parallèle et à distance de la cassette de cuisson inférieure **11** et de la cassette de cuisson supérieure **11'.**
- Ladite cassette de cuisson inférieure **11,** ladite cassette de cuisson supérieure **11'** et ladite partie postérieure **12** définissent la chambre de cuisson **13** qui reçoit les cocottes de cuisson et contient au moins deux cassettes de cuisson supérieures et inférieures constituées d'éléments radiants **21, 21', 31, 31'**
- la partie inférieure **11** et la partie supérieure **11'** comprennent respectivement
   ∘ une portion proximale **2, 2',** comprenant au moins un élément radiant proximal **21, 21' ;**
   ∘ une portion distale **3, 3'** comprenant au moins un élément radiant distal **31, 31' ;**
- la portion distale **3, 3'** comprenant au moins un, de préférence deux à cinq moyens d'isolation **33, 33'** qui comprennent de préférence au moins un premier réflecteur **331, 331'** configuré pour diriger les rayonnements émis par au moins un élément radiant distal **31, 31'** vers la chambre de cuisson **13.**

### Isolation /Concentration N°1

Dans la présente invention, le premier moyen d'isolation/concentration **33, 33'** a pour avantage d'isoler les éléments radiants distaux **31, 31'** des éléments radiaux proximaux **21,21'.**

Suivant un mode de réalisation préféré, ledit au moins un moyen d'isolation **33, 33'** comprend au moins un premier réflecteur **331, 331'** configuré pour :
a) grâce à sa face proximale, diriger et/ou concentrer les rayonnements émis par le au moins un élément radiant **21, 21'** de la partie proximale **2,2'** vers la partie proximale de la chambre de cuisson **13 ; et**
b) grâce à sa face distale, diriger et/ou concentrer les rayonnements émis par le au moins un élément radiant **31, 31'** de la partie distale **3,3'** de la cassette de cuisson vers la partie distale de la chambre de cuisson **13.**

L'avantage de l'invention est d'éviter un phénomène connu dans l'art antérieur, dans lequel la partie distale de la cocotte de cuisson (même de petite taille) est chauffée à une température plus basse que la partie proximale, phénomène qui s'amplifie dans le cas de l'utilisation d'une grande cocotte.

Dans l'art antérieur, en l'absence des réflecteurs 331 et 331', les rayonnements des radiants chauffant vont au-delà extrémités distale inférieure et supérieure de la petite cocotte de cuisson donc contribuent à augmenter le différentiel de température et donc de cuisson entre la face proximale et distale de la dite petite cocotte de cuisson

### Isolation/Concentration N°2

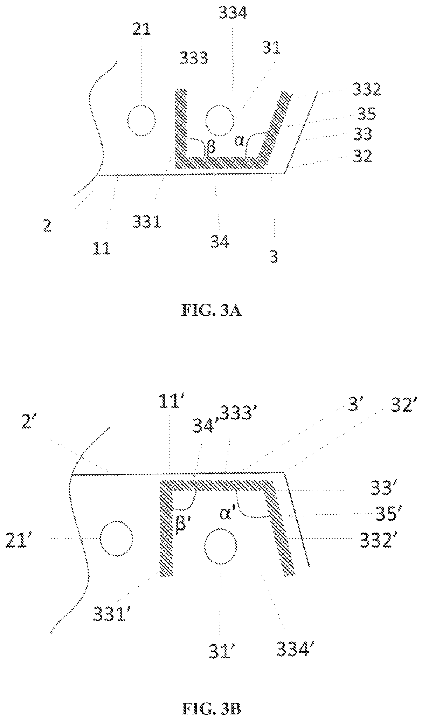

La Figure 3A montre un mode de réalisation dans lequel le au moins un moyen d'isolation 33 de la partie distale de la cassette de cuisson **inférieure** comprend en outre au moins un deuxième réflecteur **332** qui sépare le au moins un élément radiant distal **31** de l'extrémité distale **32** de la portion distale **3** de la cassette de cuisson inférieure.

La partie distale de ces réflecteurs permet de diriger et/ou concentrer les rayonnements émis par le au moins un élément radiant distal **31** vers la partie distale **3** de la cassette de cuisson vers la partie distale de la chambre de cuisson **13** et donc par voie de conséquence vers la partie distale de la cocotte de cuisson qui est logée à l'intérieur de la chambre de cuisson **13.**

La Figure 3B montre un mode de réalisation dans lequel le au moins un moyen d'isolation 33' de la partie distale de la cassette de cuisson supérieure comprend en outre au moins un deuxième réflecteur 332' qui sépare le au moins un élément radiant distal 31' de l'extrémité distale 32' de la portion distale 3' de la cassette de cuisson supérieure.

La partie distale de ces réflecteurs permet de diriger et/ou concentrer les rayonnements émis par le au moins un élément radiant distal 31' vers la partie distale 3' de la cassette de cuisson vers la partie distale de la chambre de cuisson 13 et donc par voie de conséquence vers la partie distale de la cocotte de cuisson qui est logée à l'intérieur de la chambre de cuisson **13.**

Les modes de réalisation des figures 3A et 3B peuvent bien entendu être combinés, et le dispositif de cuisson selon l'invention peut comprendre au moins un second réflecteur inférieur **332** et/ou au moins un second réflecteur supérieur **332'.**

Ainsi, ce(s) second(s) réflecteur(s) permet(tent) d'apporter une solution complémentaire au(x) premier(s) réflecteur(s) pour éviter l'inconvénient de l'art antérieur dans lequel la partie distale de la cocotte, en particulier quand il s'agit d'une grande cocotte de cuisson, est à une température plus basse que dans sa partie proximale.

La cuisson des aliments logés dans la cocote de cuisson est ainsi, grâce à ce mode de réalisation, bien plus homogène, et ce en particulier lorsque la cocotte est une grande cocotte de cuisson.

Un autre avantage de ces seconds réflecteurs est que les radiants **31, 31'** peuvent être mis en fonctionnement de manière choisie par l'utilisateur, par exemple uniquement lors de l'utilisation d'une grande cocotte de cuisson.

Dans un mode de réalisation, un moyen d'isolation est constitué d'un réflecteur ainsi que d'un film d'air statique isolant qui sépare le réflecteur **332, 332'** de l'extrémité distale de la cassette de cuisson pour réduire toute déperdition thermique et réduire la diffusion de chaleur au-delà de la cassette de cuisson, ce qui a pour avantage supplémentaire de réduire ainsi la température de la partie frontale de l'appareil de cuisson à des fins de sécurité.

### Isolation/ Concentration N°3

Selon un mode de réalisation présenté en figure 3A, le au moins un moyen d'isolation **33** de la cassette de cuisson inférieure **11** comprend en outre au moins un **troisième** réflecteur **333** qui oriente les rayonnements des radiants vers la chambre de cuisson et isole le fonds de la cassette de cuisson. Dans un mode de réalisation préféré, ledit premier réflecteur **331** et ledit deuxième réflecteur **332** sont connectés entre eux par ledit au moins un troisième réflecteur **333,** par leur extrémité distales par rapport à la chambre de cuisson. Dans un mode de réalisation, les réflecteurs **331, 332** et **333** entourent au moins un élément radiant **31.**

Selon un mode de réalisation présenté en figure 3B, le au moins un moyen d'isolation **33'** de la cassette de cuisson supérieure **11'** comprend en outre au moins un **troisième** réflecteur **333'** qui oriente les rayonnements des radiants vers la chambre de cuisson et isole la partie supérieure de la cassette de cuisson. Dans un mode de réalisation préféré, ledit premier réflecteur **331'** et ledit deuxième réflecteur **332'** sont connectés entre eux par ledit au moins un troisième réflecteur **333',** par leur extrémité distale par rapport à la chambre de cuisson. Dans un mode de réalisation, les réflecteurs **331', 332'** et **333'** entourent au moins un élément radiant **31'.**

Lesdits premier réflecteur **331, 331',** deuxième réflecteur **332, 332'** et ledit au moins un troisième réflecteur **333, 333'** seuls ou en combinaison les uns avec les autres, présentent l'avantage de permettre d'augmenter, d'améliorer, d'orienter et/ou de canaliser la concentration des rayonnements émis par le au moins un élément radiant **31, 31'.** A noter que les éléments radiants **31, 31**'peuvent être de puissance identique ou différenciée. Selon un mode de réalisation, le au moins un moyen d'isolation **33, 33'** entoure partiellement le au moins un élément radiant distal **31, 31' ;** ledit au moins un moyen d'isolation **33, 33'** comprenant une ouverture **334, 334'** dirigée vers la chambre de cuisson **13.** Dans ce mode de réalisation, les rayonnements émis par le au moins un élément radiant distal **31, 31'** de puissances différentes ou identiques seront uniquement dirigés vers la chambre de cuisson **13.**

Selon un mode de réalisation, le premier réflecteur **331, 331',** le au moins un deuxième réflecteur **332, 332',** et/ou le au moins un troisième réflecteur **333, 333'** est une surface réfléchissante, qui peut être en tout matériau adapté, notamment en métal ou en céramique. Suivant un mode de réalisation préféré, les réflecteurs sont en inox.

Selon l'invention, l'inclinaison du premier réflecteur **331** par rapport à la surface horizontale inférieure de la cassette de cuisson inférieure **11** forme un angle β compris entre 70° et 120° (FIG 3A). Selon un mode de réalisation, l'inclinaison du premier réflecteur **331'** par rapport à la surface horizontale supérieure de la cassette de cuisson supérieure **11'** forme un angle β' compris entre 70° et 120° (FIG 3B). Selon un mode de réalisation, les angles β et β' sont identiques. Selon un autre mode de réalisation, les angles β et β' sont différents.

Selon un mode de réalisation, l'inclinaison du deuxième réflecteur **332** par rapport à la surface horizontale inférieure de la cassette de cuisson inférieure **11** forme un angle α compris entre 85° et 140° (FIG 3A). Selon un mode de réalisation, l'inclinaison du deuxième réflecteur **332'** par rapport à la surface horizontale supérieure de la cassette de cuisson supérieure **11'** forme un angle α' compris entre 85° et 140° (FIG 3B). Selon un mode de réalisation, les angles α et α' sont identiques. Selon un autre mode de réalisation, les angles α et α' sont différents.

Les angles d'inclinaison du au moins un premier réflecteur **331, 331'** et les angles d'inclinaison du au moins un deuxième réflecteur **332, 332'** sont conçus pour améliorer, orienter, et/ou canaliser les rayonnements émis par le ou au moins un élément radiant distal **31, 31'.**

Selon un mode de réalisation, la portion proximale **2, 2'** comprend un nombre d'éléments radiants proximaux **21, 21'** compris entre 1 et 20, de préférence entre 1 et 10, et les radiants sont de puissance identiques ou différentes. Dans un mode de réalisation préférentiel, l'appareil de cuisson radiant ouvert comprend 1 à 10, de préférence 1 à 5 éléments radiants proximaux dans la portion proximale de la partie inférieure, 1 à 10, de préférence 1 à 5 éléments radiants proximaux dans la portion proximale de la partie supérieure.

Selon un mode de réalisation, la portion distale **3, 3'** comprend un nombre d'éléments radiants distaux **31, 31'** compris entre 1 et 10, de préférence entre 1 et 6, et les radiants sont de puissance identiques ou différentes. Dans un mode de réalisation préférentiel, l'appareil de cuisson radiant ouvert comprend 1 à 5, de préférence 1 à 2 éléments radiants distaux dans la portion distale de la partie inférieure, 1 à 5, de préférence 1 à 2 éléments radiants distaux dans la portion distale de la partie supérieure.

Selon un mode de réalisation, le au moins un élément radiant proximal **21, 21'** et/ou le au moins un élément radiant distal **31, 31'** ont une forme allongée. Selon un mode de réalisation, les éléments radiants proximaux **21** inférieurs peuvent avoir une longueur différente des éléments radiants proximaux **21'** supérieurs. Selon un mode de réalisation, le au moins un élément radiant distal **31** peut avoir une longueur différente de l'élément radiant distal **31'.** Selon un mode de réalisation, le au moins un élément proximal radiant **31** et le au moins un élément proximal radiant **21** peuvent avoir une longueur identique. De même le au moins élément distal radiant **31'** et l'élément distal radiant **21'** peuvent avoir une longueur identique.

Selon un mode de réalisation, l'axe longitudinal des éléments radiants proximaux **21, 21'** et des éléments radiants distaux **31, 31'** sont parallèles. Selon un mode de réalisation, ledit axe longitudinal de l'élément radiant proximal **21, 21'** et/ou ledit axe longitudinal de l'élément radiant distal **31, 31'** sont parallèles à l'extrémité distale **32, 32'** des cassettes de cuisson **11,11'.**

Selon un mode de réalisation, le au moins un premier réflecteur **331** et le au moins un deuxième réflecteur **332** s'étendent sur la totalité de la largeur de la cassette de cuisson inférieure **11.** Par largeur, on entend la distance, le long de l'axe, qui est parallèle à l'extrémité distale **32.** Selon un mode de réalisation, cette largeur est définie par la distance séparant les flancs intérieurs de l'appareil, sur lesquels se fixent les extrémités latérales des dites cassettes de cuisson.

Selon un mode de réalisation, le au moins un premier réflecteur **331'** et le au moins un deuxième réflecteur **332'** s'étendent sur la totalité de la largeur de la cassette de cuisson supérieure **11'.** Par largeur, on entend la distance, le long de l'axe, qui est parallèle à l'extrémité distale **32'.**

Selon un mode de réalisation, les cassettes de cuisson **11** et **11'** peuvent être de dimensions différentes.

Selon un mode de réalisation, la puissance du au moins un élément radiant distal **31, 31'** est supérieure à la puissance du au moins un élément radiant proximal **21, 21'.** Selon un mode de réalisation, la puissance du au moins un élément radiant distal **31, 31'** est en moyenne 1 à 7 fois supérieure à la puissance minimale du au moins un élément radiant proximal **21, 21'.** La puissance unitaire des radiants proximaux **21, 21',** et radiants distaux **31, 31'** peut varier unitairement le long des cassettes de cuisson **11** et **11'.** La mise sous tension et le réglage de l'intensité des radiants **21, 21',** et radiants distaux **31, 31',** peuvent être différenciés unitairement le long des cassettes de cuisson **11** et **11'.** Les radiants **31, 31'** peuvent fonctionner simultanément ou non, avec ou non des intensités différentes. Les radiants distaux **21, 21',** peuvent fonctionner simultanément ou non, avec ou non des intensités différentes.

Selon un mode de réalisation, l'ouverture **334** du au moins un moyen d'isolation **33** de la portion distale **3** de la cassette de cuisson inférieure **11** est configurée pour être parallèle à et/ou en regard de l'ouverture **334'** du au moins un moyen d'isolation **33'** de la portion distale **3'** de la cassette de cuisson supérieure **11'.**

Selon un mode de réalisation, les moyens d'isolation **33** et **33'** ne sont pas similaires, ni de hauteurs similaires. Selon un mode de réalisation, les réflecteurs **331', 332'** sont surbaissés pour se rapprocher au maximum de la cocotte de cuisson pour une meilleure maitrise de la canalisation de l'énergie diffusée par le(s) radiant(s) **31'.**

### Isolation latérale et arrière de la chambre de cuisson

Afin de limiter les infiltrations d'air latérales qui s'immiscent entre le dessous et le dessous des cocottes, selon un mode de réalisation, les extrémités latérales et arrières de la chambre de cuisson **13** comprennent des réflecteurs verticaux latéraux qui ferment partiellement ou totalement les ouvertures latérales et arrière de la chambre de cuisson 13. Dans un mode de réalisation, lesdits réflecteurs recouvrent 5 à 50 % des ouvertures latérales et arrières de la chambre de cuisson **13.**

### Isolation des extrémités des radiants

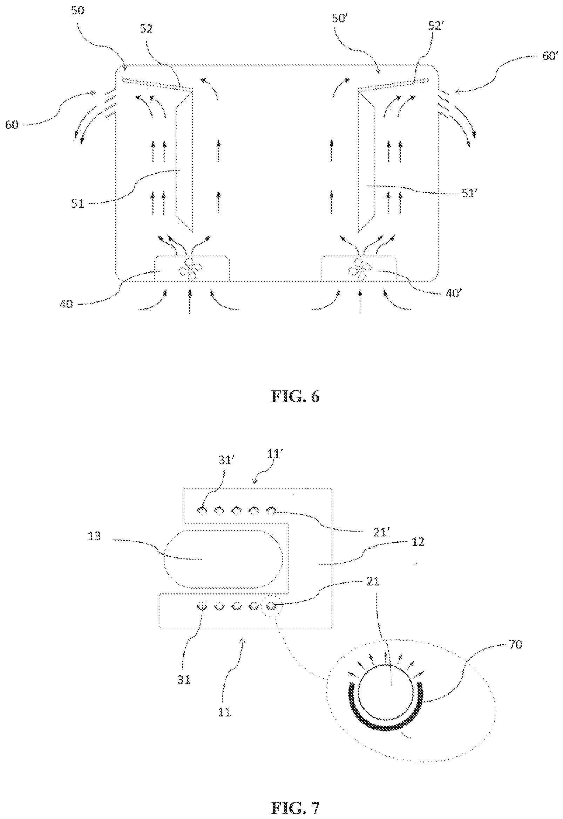

Selon un mode de réalisation, les parties latérales des cassettes de cuisson inférieure **11** et/ou supérieure **11'** comprennent des coffrets latéraux isolants fermés à leurs extrémités arrière et avant ; selon un mode de réalisation, l'appareil selon l'invention comprend en outre au moins un moyen additionnel allongé d'isolation dit coffrets d'isolation qui isolent les extrémités des radiants. Dans ce mode de réalisation, la perte énergétique provenant de l'extrémité des radiants est très fortement réduite. De plus, ces coffrets d'isolation présentent l'avantage d'isoler les extrémités des radiants des flux d'air frais provenant des ventilateurs **40, 40'** (cf. fig.6) fixés sur la face arrière de l'appareil de cuisson.

En référence à la figure 6, afin de palier une insuffisance d'évacuation latérale de l'air chaud central dans l'appareil de cuisson radiant ouvert selon l'invention, il est envisagé des déflecteurs d'air **50, 50'** frontaux qui ont pour but d'extraire l'air chaud central vers des ouïes extérieures **60,60'.**

Il est possible d'avoir un déflecteur d'air ou deux déflecteurs d'air **50** et **50'.** Dans le cas de figure où il y a un deux déflecteurs d'air **50,50'** tel qu'illustré en figure 6, de manière préférentielle, les deux déflecteurs d'air sont symétriques par rapport à un plan central de symétrie séparant l'appareil de cuisson ouvert 1 en deux parties symétriques de manière à obtenir une cassette de cuisson inférieure **11** et une cassette de cuisson supérieure **11'.**

Chacun des déflecteurs **50,50'** présente une surface plane **51,51'** et une surface oblique **52,52'** apte à orienter l'air chaud central vers les ouïes extérieures **60,60'.**

Conformément à la figure 6, de manière préférentielle, le premier ensemble : ventilateur **40,** déflecteur **50** et ouïe extérieur **60** a un second ensemble miroir **40',50'** et **60'selon** une symétrie centrale plan, ledit plan de symétrie séparant l'appareil de cuisson ouvert **1** en deux parties symétriques de manière à obtenir une cassette de cuisson inférieure **11** et une cassette de cuisson supérieure **11'.**

En outre, à défaut desdits ensembles, les flux d'air froids latéraux s'engouffrent en partie centrale et de la condensation peut apparaître au niveau de la portion distale **3,3'** refroidie par cet air froid.

Selon un mode de réalisation, les coffrets d'isolation de l'appareil de cuisson selon l'invention ont une longueur égale à la dimension latérale des cassettes de cuisson. Selon un mode de réalisation, les coffrets d'isolation de l'appareil de cuisson selon l'invention sont adaptés pour couvrir les extrémités des radiant. Selon un mode de réalisation, les coffrets d'isolation ont des dimensions supérieures de 5 à 15 millimètres aux dimensions des extrémités des radiants.

L'appareil de cuisson selon l'invention est configuré pour recevoir au sein de sa chambre de cuisson **13,** des cocottes de cuisson de différentes dimensions, pour la cuisson des aliments.

Selon un mode de réalisation, les éléments radiants **21, 21', 31, 31'** ont une forme géométrique spécifique, notamment la forme d'un disque circulaire, la forme d'un cylindre circulaire horizontal enroulé sur lui-même ou la forme d'un prisme ou la forme d'un tube cylindrique à diamètre constant et rectiligne.

Selon un mode de réalisation, les faces ouvertes des cassettes de cuisson inférieure **11** et supérieure **11'** comprennent en outre une fenêtre de protection. Une telle fenêtre de protection protège mécaniquement le au moins un élément radiant distal **31, 31'** et le au moins un élément radiant proximal **21, 21'** de tout impact physique, protège les radiants de toutes salissures générées lors des cuissons, contribue à isoler thermiquement les radiants de l'influence de flux d'air frais externe à la chambre de cuisson et contribue aussi à une meilleure répartition des effets chauffants des différents radiants. Selon un mode de réalisation, une telle fenêtre de protection est en verre ou en vitrocéramique. Selon un autre mode de réalisation, une telle fenêtre de protection est une grille métallique de protection.

Selon un mode de réalisation non-illustré, la cassette de cuisson supérieure **11'** comprend en outre une grille de protection séparant le au moins un élément radiant distal **31'** et le au moins un élément radiant proximal **21'** de la chambre de cuisson **13.** Selon un mode de réalisation, une telle fenêtre de protection est en verre ou en vitrocéramique. Selon un autre mode de réalisation, une telle fenêtre de protection est une grille métallique de protection.

Dans un mode de réalisation préférentiel, l'appareil de cuisson selon l'invention est configuré pour cuire des aliments introduits dans une cocotte de cuisson placée dans la chambre de cuisson **13,** à une température de 40°C à 98°C.

Selon un mode de réalisation, l'appareil de cuisson selon l'invention est alimenté par l'électricité.

Selon un mode de réalisation, la forme du moyen d'isolation **33, 33'** dépend de sa localisation par rapport à la cassette de cuisson inférieure **11** ou la cassette de cuisson supérieure **11'.**

Selon un mode de réalisation, le moyen d'isolation **33, 33'** des faces extérieures distales des éléments **332, 332'** est composé d'air ou autre isolant. Dans ce mode de réalisation, la partie distale des cassettes de cuisson **11, 11'** est isolée contre les effets refroidissant du ou des ventilateurs 40, 40' (cf. fig.6) fixés sur la paroi arrière de l'appareil de cuisson **1** ; les rayonnements émis par les éléments radiants distaux **31, 31'** sont focalisés, dirigés, concentrés vers la partie distale de la chambre de cuisson **13,** ce qui présente un avantage important, notamment lors de l'utilisation de cocottes de cuisson de grandes dimensions.

Selon un mode de réalisation, le moyen d'isolation **34, 34',** des faces extérieures des éléments **333, 333'** est composé d'air ou autre isolant.

Selon un mode de réalisation, le premier réflecteur **331, 331'** a une hauteur de 0,5 à 10 centimètres. Selon un mode de réalisation, le premier réflecteur **331, 331'** a une hauteur supérieure à l'élément radiant proximal **31, 31'.** Le différentiel de hauteur se mesure par la différence verticale de niveaux entre le centre vertical du radiant **31** et l'extrémité supérieure de l'élément **331,** entre le centre du radiant **31'et** l'extrémité inférieure de l'élément **331'.** Plus ce différentiel est important, plus le rayonnement des radiants **31, 31'** est orienté vers la zone de cuisson ciblée, ici, la partie distale des cocottes de cuisson.

Selon un mode de réalisation, le deuxième réflecteur **332, 332'** a une hauteur comprise entre 0,5 et 10 centimètres. Selon un mode de réalisation, le deuxième réflecteur **332, 332'** a une hauteur plus élevée que l'élément radiant proximal **31, 31'.** Le différentiel de hauteur se mesure par la différence verticale de niveaux entre le centre vertical du radiant **31** et l'extrémité supérieure de l'élément **332,** entre le centre vertical du radiant **31'et** l'extrémité inférieure de l'élément **332'** Plus ce différentiel est important, plus le rayonnement des radiants est orienté vers la zone de cuisson ciblée, ici, la partie distale de la cocotte de cuisson. L'orientation est de plus consolidée par l'angle **α, α'** qui selon un mode de réalisation varie de 85 à 140°. Ce différentiel vertical de hauteur par un mode de réalisation préférentiel entre le centre vertical du radiant **31'** et l'extrémité inférieure de l'élément **332'est** accentué par le passage, à travers la grille de protection des radiants supérieurs, de l'extrémité inférieure de l'élément **332'.**

Selon un mode de réalisation, l'ouverture **334, 334'** et les réflecteurs **331, 331', 332, 332', 333, 333'** ont les mêmes longueurs. Selon un mode de réalisation, comme l'illustrent les figures 3A et 3B, l'ouverture **334, 334'** et les réflecteurs **331, 331', 332, 332', 333, 333'** ont des longueurs différentes.

Selon un mode de réalisation, l'appareil de cuisson radiant ouvert 1 selon l'invention comprend un moyen d'allumage. Selon un mode de réalisation, ledit moyen d'allumage est un interrupteur commandable à distance ou un système électronique commandable à distance.

Selon un mode de réalisation, l'appareil de cuisson radiant ouvert 1 selon l'invention comprend un moyen de réglage de la température de cuisson. Selon un mode de réalisation, ledit moyen de réglage de la température de cuisson est aussi commandable à distance ou un système électronique commandable à distance.

### La réflexion sectorisée des tubes chauffant

En référence à la figure 7, dans le but de concentrer toute l'énergie émise par les éléments radiants proximaux **21,21'** ou distaux **31,31'** vers la cocotte de cuisson, lesdits éléments radiants proximaux ou distaux éléments reçoivent une couche de matériaux isolants et réfléchissants **70** autour de leur face opposée à la chambre de cuisson **13.**

La couche de matériaux isolants et réfléchissants **70,** entoure partiellement l'élément radial proximal **21,21'** ou distal **31,31'** de manière bien entendu à permettre une diffusion d'énergie vers la chambre de cuisson 13. La couverture est préférentiellement effectuée tout le long de l'élément radial **21,21',31,31'.**

### La chauffe sectorisée des tubes :

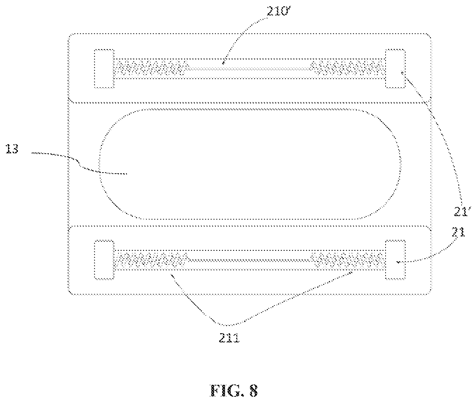

En référence à la figure 8, et dans le but d'optimiser les zones de cuisson de façon sélective, il peut être envisagé l'adjonction de résistances chauffantes **211** conçue selon des zones ciblées de chauffe vers la chambre de cuisson **13.**

A la figure 8, est illustrée une configuration dans laquelle une zone centrale **210** n'est pas chauffée tandis que les extrémités **211** selon une coupe transversale de l'appareil de cuisson selon l'invention sont, quant à elles, chauffées de manière sélective.

De manière préférentielle, tel qu'illustré en figure 8, les zones de chauffes **211** sont symétriquement disposées de part et d'autre de la zone centrale **210'.**

Les modes de réalisation avec chauffe sectorisée des tubes, réflexion sectorisée des tubes chauffant et Isolation des extrémités des radiants sont bien entendues combinables afin d'optimiser l'homogénéité de la cuisson obtenue grâce à l'appareil de cuisson selon l'invention.

Si certains modes de réalisation ont été décrit et illustrés, la description détaillée n'est pas construite pour limiter l'invention. De nombreux modes de réalisation alternatifs peuvent être réalisés par l'homme du métier sans se démarquer de l'esprit et de la portée de la divulgation comme définie par les revendications.

### EXEMPLE

### Matériel et Méthodes

Un appareil de cuisson radiant ouvert selon la présente invention et une cocotte de cuisson contenant un gratin dauphinois ont été utilisés. Des moyens de mesure de la température du gratin dauphinois dans la cocotte de cuisson ont été ajoutés de manière à suivre l'évolution de la température de cuisson du gratin dauphinois en différents points de la cocotte de cuisson.

La cocotte de cuisson contenant le gratin a été placé dans la chambre de cuisson de l'appareil de cuisson radiant ouvert et a été chauffée à une température « cible » de 93, 94°C au coeur du gratin et de 98°C en surface du gratin. La température est mesurée à différent endroits de la cocotte de cuisson.

### Résultats

La température du gratin mesurée à coeur du gratin au centre et à la périphérie du plat est de 93, 94°C. A la surface du gratin elle atteint 97, 98°C.

Au regard de l'art antérieur présenté plus haut, le différentiel de température de cuisson a été réduit de manière significative (Ecart antérieur de 20°C réduit par cette innovation technologique à 1° C) permettant ainsi une cuisson et un dorage parfaitement homogène contrairement à ce que l'on pouvait observer précédemment. En effet, avec les appareils de l'art antérieur, pour obtenir une cuisson et un dorage homogènes, il était nécessaire, en cours de cuisson de faire pivoter la cocotte de cuisson de 180° (la face avant de la cocotte de cuisson se positionne de ce fait au fond de la chambre de cuisson), manipulation contraignante et peu pratique.

## Revendications

1. Appareil de cuisson radiant ouvert (1) ayant une forme en C ou une forme en U et comprenant une cassette de cuisson inférieure (11) ; une cassette de cuisson supérieure (11') ; et une partie postérieure (12) définissant ensemble une chambre de cuisson (13) ; ledit appareil comprenant
- une portion proximale (2, 2') comprenant au moins un élément radiant proximal (21, 21'); et
- une portion distale (3, 3') comprenant au moins un élément radiant distal (31, 31')
- au moins un moyen d'isolation (33,33'), séparant le au moins un élément radiant distal (31,31') du au moins un élément radial proximal (21, 21');
- ledit moyen d'isolation (33, 33') comprenant au moins un premier réflecteur (331, 331') configuré pour diriger les rayonnements émis par le au moins un élément radiant distal (31, 31') vers la chambre de cuisson (13)
**caractérisé en ce que** l'inclinaison du premier réflecteur (331) par rapport à la surface horizontale inférieure de la cassette de cuisson inférieure (11) forme un angle β compris entre 70° et 120°.

2. Appareil de cuisson radiant ouvert (1) selon la revendication **1,** dans lequel au moins un moyen d'isolation (33, 33') de la partie inférieure de l'appareil (1) comprend en outre au moins un deuxième réflecteur (332, 332').

3. Appareil de cuisson radiant ouvert (1) selon la revendication **1** ou la revendication **2,** dans lequel ledit premier (331, 331') et ledit deuxième (332, 332') réflecteurs, sont connectés entre eux par au moins un troisième réflecteur (333, 333').

4. Appareil de cuisson radiant ouvert (1) selon l'une quelconque des revendications **1** à **3,** dans lequel au moins un moyen d'isolation (33, 33') entoure partiellement un élément radiant distal (31, 31') ; ledit au moins un moyen d'isolation (33, 33') comprenant une ouverture (334, 334') dirigée vers la chambre de cuisson (13).

5. Appareil de cuisson radiant ouvert (1) selon l'une quelconque des revendications **1** à **4,** dans lequel l'inclinaison du premier réflecteur (331') par rapport à la surface horizontale de la cassette de cuisson supérieure (11') est inclinée par rapport au plan de la partie supérieure (11'), forme un angle β compris entre 70° et 120°.

6. Appareil de cuisson radiant ouvert (1) selon l'une quelconque des revendications **2** à **5,** dans lequel l'inclinaison du deuxième réflecteur (332) par rapport à la surface horizontale inférieure de la cassette de cuisson inférieure (11), forme un angle α compris entre 85° et 140°.

7. Appareil de cuisson radiant ouvert (1) selon l'une quelconque des revendications **2** à **6,** dans lequel l'inclinaison du deuxième réflecteur (332') par rapport à la surface horizontale supérieure de la cassette de cuisson inférieure (11'), forme un angle α' compris entre 85° et 140°.

8. Appareil de cuisson radiant ouvert (1) selon l'une quelconque des revendications **1** à **7,** la portion proximale (2, 2') comprend un nombre d'éléments radiants proximaux (21, 21') compris entre 1 et 20.

9. Appareil de cuisson radiant ouvert (1) selon l'une quelconque des revendications **1** à 8, dans lequel la puissance du au moins un élément radiant distal (31, 31'), est identique ou supérieure la puissance du au moins un élément radiant proximal (21, 21').

10. Appareil de cuisson radiant ouvert (1) selon l'une quelconque des revendications **4** à 9, dans lequel l'ouverture (334) d'un moyen d'isolation (33) de la portion distale (3) est configurée pour être parallèle à et/ou en regard de l'ouverture (334') d'un moyen d'isolation (33') de la portion distale (3').

11. Appareil de cuisson radiant ouvert (1) selon l'une quelconque des revendications **1** à 10, comprenant au moins un réflecteur additionnel fermant partiellement la surface latérale de la chambre de cuisson (13).

12. Appareil de cuisson radiant ouvert (1) selon l'une quelconque des revendications **1** à 11, dans lequel les cassettes de cuisson (11, 11') sont fixées à des flancs internes qui comprennent au moins un moyen additionnel allongé d'isolation fermé à ses extrémités.

## Patentansprüche

1. Offenes Strahlungsgargerät (1), das eine C-Form oder eine U-Form aufweist und eine untere Garkassette (11); eine obere Garkassette (11'); und einen hinteren Teil (12) umfasst, die zusammen eine Garkammer (13) definieren; wobei das Gerät umfasst
- einen proximalen Abschnitt (2, 2'), der mindestens ein proximales Strahlungselement (21, 21') umfasst; und
- einen distalen Abschnitt (3, 3'), der mindestens ein distales Strahlungselement (31, 31') umfasst;
- mindestens ein Isolationsmittel (33, 33'), das das mindestens eine distale Strahlungselement (31, 31') von dem mindestens einen proximalen Strahlungselement (21, 21') trennt;
- wobei das Isolationsmittel (33, 33') mindestens einen ersten Reflektor (331, 331') umfasst, der so konfiguriert ist, dass er die von dem mindestens einen distalen Strahlungselement (31, 31') emittierte Strahlung zur Garkammer (13) lenkt,
**dadurch gekennzeichnet, dass** die Neigung des ersten Reflektors (331) in Bezug auf die untere horizontale Fläche der unteren Garkassette (11) einen Winkel β im Bereich zwischen 70° und 120° bildet.

2. Offenes Strahlungsgargerät (1) nach Anspruch **1,** wobei mindestens ein Isolationsmittel (33, 33') des unteren Teils des Geräts (1) weiter mindestens einen zweiten Reflektor (332, 332') umfasst.

3. Offenes Strahlungsgargerät (1) nach Anspruch **1** oder Anspruch **2,** wobei der erste (331, 331') und der zweite (332, 332') Reflektor durch mindestens einen dritten Reflektor (333, 333') miteinander verbunden sind.

4. Offenes Strahlungsgargerät (1) nach einem der Ansprüche **1** bis **3,** wobei mindestens ein Isolationsmittel (33, 33') ein distales Strahlungselement (31, 31') teilweise umgibt; wobei das mindestens eine Isolationsmittel (33, 33') eine Öffnung (334, 334') umfasst, die zur Garkammer (13) gerichtet ist.

5. Offenes Strahlungsgargerät (1) nach einem der Ansprüche **1** bis **4,** wobei die Neigung des ersten Reflektors (331') in Bezug auf die horizontale Fläche der oberen Garkassette (11') in Bezug auf die Ebene des Oberen Teils (11') geneigt ist, einen Winkel β im Bereich zwischen 70° und 120° bildet.

6. Offenes Strahlungsgargerät (1) nach einem der Ansprüche **2** bis **5,** wobei die Neigung des zweiten Reflektors (332) in Bezug auf die untere horizontale Fläche der unteren Garkassette (11) einen Winkel α im Bereich zwischen 85° und 140° bildet.

7. Offenes Strahlungsgargerät (1) nach einem der Ansprüche **2** bis **6,** wobei die Neigung des zweiten Reflektors (332') in Bezug auf die obere horizontale Fläche der unteren Garkassette (11') einen Winkel α' im Bereich zwischen 85° und 140° bildet.

8. Offenes Strahlungsgargerät (1) nach einem der Ansprüche **1** bis **7,** wobei der proximale Abschnitt (2, 2') eine Anzahl proximaler Strahlungselemente (21, 21') im Bereich zwischen 1 und 20 umfasst.

9. Offenes Strahlungsgargerät (1) nach einem der Ansprüche **1** bis **8,** wobei die Leistung des mindestens einen distalen Strahlungselements (31, 31') gleich oder größer ist als die Leistung des mindestens einen proximalen Strahlungselements (21, 21').

10. Offenes Strahlungsgargerät (1) nach einem der Ansprüche **4** bis **9,** wobei die Öffnung (334) eines Isolationsmittels (33) des distalen Abschnitts (3) so konfiguriert ist, dass sie zur Öffnung (334') eines Isolationsmittels (33') des distalen Abschnitts (3') parallel ist und/oder dieser gegenüberliegt.

11. Offenes Strahlungsgargerät (1) nach einem der Ansprüche **1** bis **10,** das mindestens einen zusätzlichen Reflektor umfasst, der die Seitenfläche der Garkammer (13) teilweise schließt.

12. Offenes Strahlungsgargerät (1) nach einem der Ansprüche **1** bis **11,** wobei die Garkassetten (11, 11') an Innenflanken befestigt sind, die mindestens ein zusätzliches längliches Isolationsmittel umfassen, das an seinen Enden geschlossen ist.

## Claims

1. An open radiant cooking appliance (1) having a C shape or a U shape and comprising a lower cooking cassette (11); an upper cooking cassette (11'); and a posterior part (12) together defining a cooking chamber (13); said appliance comprising
- a proximal portion (2, 2') comprising at least one proximal radiant element (21, 21'); and
- a distal portion (3, 3') comprising at least one distal radiant element (31, 31')
- at least one insulation means (33, 33'), separating the at least one distal radiant element (31, 31') from the at least one proximal radiant element (21, 21');
- said insulation means (33, 33') comprising at least a first reflector (331, 331') configured for directing the radiation emitted by the at least one distal radiant element (31, 31') towards the cooking chamber (13)
**characterized in that** the inclination of the first reflector (331) with respect to the lower horizontal surface of the lower cooking cassette (11) forms an angle β comprised between 70° and 120°.

2. Open radiant cooking appliance (1) according to claim **1,** wherein at least one insulation means (33, 33') of the lower part of the appliance (1) further comprises at least one second reflector (332, 332').

3. Open radiant cooking appliance (1) according to claim **1** or claim **2,** wherein said first (331, 331') and second (332, 332') reflectors are connected to each other by at least one third reflector (333, 333').

4. Open radiant cooking appliance (1) according to any one of claims **1** to **3,** wherein at least one insulation means (33, 33') partially surrounds a distal radiant element (31, 31'); said at least one insulation means (33, 33') comprising an opening (334, 334') directed towards the cooking chamber (13).

5. Open radiant cooking appliance (1) according to any one of claims **1** to **4,** wherein the inclination of the first reflector (331') with respect to the horizontal surface of the upper cooking cassette (11') is inclined with respect to the plane of the upper part (11'), forms an angle β between 70° and 120°.

6. Open radiant cooking appliance (1) according to any one of claims **2** to **5,** wherein the inclination of the second reflector (332) with respect to the lower horizontal surface of the lower cooking cassette (11), forms an angle α between 85° and 140°.

7. Open radiant cooking appliance (1) according to any one of claims **2** to **6,** wherein the inclination of the second reflector (332') with respect to the upper horizontal surface of the lower cooking cassette (11') forms an angle α' between 85° and 140°.

8. Open radiant cooking appliance (1) according to any one of claims **1** to **7,** the proximal portion (2, 2') comprises a number of proximal radiant elements (21, 21') between 1 and 20.

9. Open radiant cooking appliance (1) according to any one of claims **1** to **8,** wherein the power of the at least one distal radiant element (31, 31') is identical to or greater than the power of the at least one proximal radiant element (21, 21').

10. Open radiant cooking appliance (1) according to any one of claims **4** to **9,** wherein the opening (334) of an insulation means (33) of the distal portion (3) is configured to be parallel to and/or opposite the opening (334') of an insulation means (33') of the distal portion (3').

11. Open radiant cooking appliance (1) according to any one of claims **1** to **10,** comprising at least one additional reflector partially closing the side surface of the cooking chamber (13).

12. Open radiant cooking appliance (1) according to any one of claims **1** to **11,** in which the cooking cassettes (11, 11') are attached to internal flanks that comprise at least one elongated additional insulation means closed at its ends.
